# EUROPÄISCHE PATENTSCHRIFT

(11) **EP 0 764 698 B1**
(45) Veröffentlichungstag und Bekanntmachung des Hinweises auf die Patenterteilung: **22.12.1999**
(21) Anmeldenummer: 96114802.0
(22) Anmeldetag: 16.09.1996
(51) Int. Cl.: C09D 4/00, C08F 8/32

(54) **Strahlungshärtbare Zusammensetzungen, enthaltend oberflächenaktive, verkappte Aminoverbindungen**
Radiation curable compositions containing surface active masked amine compounds
Compositions durcissables par rayonnement contenant des composés tensioactifs à fonctions amines masquées

(30) Priorität: 22.09.1995 DE 19535161
(43) Veröffentlichungstag der Anmeldung: 26.03.1997
(73) Patentinhaber: BASF AKTIENGESELLSCHAFT, 67056 Ludwigshafen (DE)
(72) Erfinder: Schwalm, Reinhold, 67157 Wachenheim (DE); Reich, Wolfgang, 67133 Maxdorf (DE); Häussling, Lukas, 67098 Bad Dürkheim (DE); Beck, Erich, 68528 Ladenburg (DE)

(56) Entgegenhaltungen:
- EP-A- 0 747 454
- WO-A-94/28075
- DATABASE WPI Week 9403 Derwent Publications Ltd., London, GB; AN 94023040 XP002021404 & JP-A-05 331 366 (SHINGIJUTSU JIGYODAN)

## Beschreibung

Die Erfindung betrifft strahlungshärtbare Zusammensetzungen, mit reduzierter Empfindlichkeit gegenüber Sauerstoff, enthaltend
a) strahlungshärtbare, radikalisch polymerisierbare Verbindungen.
b) verkappte Aminoverbindungen, welche in Verbindungen a) oberflächenaktiv sind und bei Bestrahlung mit energiereichem Licht Aminoverbindungen mit primären, sekundären oder primären und sekundären Aminogruppen freisetzten, wobei die Anzahl der in den Aminogruppen gebundenen H-Atome (aminische H-Atome) insgesamt mindestens 2 ist,
wobei der Gehalt der Verbindungen b) 0,1 bis 20 Gew.-%, bezogen auf die Summe von a) + b) beträgt und als Maß für die Oberflächenaktivität von b) der Kontaktwinkel eines Wassertropfens auf einer Beschichtung aus 99 Gew.-% a) und 1 Gew.-% b) auf Glas (Dicke der Beschichtung 50 µm) gemessen 2 Minuten nach auftragen der Beschichtung gilt und dieser Kontaktwinkel mindestens 110 % des Kontaktwinkels im Fall einer Beschichtung aus a) beträgt.

Des weiteren betrifft die Erfindung ein Verfahren zur Herstellung von Formkörpern oder Beschichtungen und Formkörper oder Beschichtungen, welche durch ein solches Verfahren erhältlich sind.

Bei der Strahlungshärtung von radikalisch polymerisierbaren Verbindungen, insbesondere von (Meth)acrylatverbindungen kann eine starke Inhibierung der Polymerisation bzw. Härtung durch Sauerstoff, insbesondere an der Oberfläche auftreten. Diese Inhibierung führt zu einer unvollständigen Härtung in der Oberfläche und so z.B zu klebrigen Beschichtungen. Vielfältig ist daher der Ausschluß von Luftsauerstoff erforderlich, um mit der Inhibierung verbundene Nachteile zu vermeiden.

Aus der nicht vorveröffentlichten deutschen Patentanmeldung 19 520 888.9 (OZ 45918) sind strahlungshärtbare Zusammensetzungen aus (Meth)acrylatverbindungen und verkappten Aminoverbindungen bekannt.

In der DE-A-23 46 424 ist die Modifizierung von Acrylatharzen mit primären oder sekundären Aminen zur Erhöhung der Reaktivität bei der Strahlungshärtung beschrieben.

Aus JP-A-05 331 366 und der am Prioritätstag der vorliegenden Anmeldung noch nicht veröffentlichten EP-A-747 454 (Dokument gemäß Artikel 54(3) EPÜ) sind bereits Bindemittel mit blockierten Aminen, welche durch Bestrahlung mit energiereichem Licht deblockiert werden und sich anschließend in Form einer Michael-Addition an Acrylgruppen addieren, bekannt.

Aufgabe der vorliegenden Erfindung waren daher strahlungshärtbare Zusammensetzungen auf Basis radikalisch polymerisierbarer Verbindungen, insbesondere auf Basis von (Meth)acrylatverbindungen, deren Polymerisation bzw. Härtung nicht oder zumindest in verringertem Ausmaß durch Sauerstoff inhibiert wird.

Demgemäß wurden die eingangs definierten strahlungshärtbaren Zusammensetzungen gefunden.

Bei den Verbindungen a) handelt es sich insbesondere um radikalisch polymerisierbare Verbindungen mit mindestens 2 copolymerisierbaren, ethylenisch ungesättigten Gruppen (Verbindungen a 1). Bevorzugt handelt es sich bei mindestens 50 Gew.-%, besonders bevorzugt mindestens 80 Gew.-% ganz besonders bevorzugt mindestens 90 Gew.-% der Verbindungen a) um Verbindungen a₁. Insbesondere handelt es sich bei den Verbindungen a ausschließlich um a₁.

Bevorzugte Verbindungen a₁ enthalten 2 bis 20, bevorzugt 2 bis 10 und ganz besonders bevorzugt 2 bis 6 copolymerisierbare, ethylenisch ungesättigte Doppelbindungen.

Insbesondere handelt es sich bei Verbindungen a₁ um (Meth)acrylatverbindungen, bevorzugt sind jeweils die Acrylatverbindungen, d.h. die Derivate der Acrylsäure.

Das zahlenmittlere Molekulargewicht Mₙ der Verbindungen a₁ insbesondere (Meth)acrylatverbindungen liegt bevorzugt unter 15000, besonders bevorzugt unter 5000, ganz besonders bevorzugt unter 3000 g/mol und über 180 g/mol (bestimmt durch Gelpermeationschromatographie mit Polystyrol als Standard und Tetrahydrofuran als Elutionsmittel).

Als (Meth)acrylatverbindungen genannt seien (Meth)acrylsäureester und insbesondere Acrylsäureester von mehrfunktionellen Alkoholen, insbesondere solchen, die neben den Hydroxylgruppen keine weiteren funktionellen Gruppen oder allenfalls Ethergruppen enthalten. Beispiele solcher Alkohole sind z.B. bifunktionelle Alkohole, wie Ethylenglykol, Propylenglykol, und deren höher kondensierte Vertreter, z.B. wie Diethylenglykol, Triethylenglykol, Dipropylenglykol oder Tripropylenglykol, Butandiol, Pentandiol, Hexandiol, Neopentylglykol, alkoxylierte phenolische Verbindungen, wie ethoxylierte bzw. propoxylierte Bisphenole, Cyclohexandimethanol, trifunktionelle und höherfunktionelle Alkohole, wie Glycerin, Trimethylolpropan, Butantriol, Trimethylolethan, Pentaerythrit, Ditrimethylolpropan, Dipentaerythrit, Sorbit, Mannit und die entsprechenden alkoxylierten, insbesondere ethoxy- und propoxylierte Alkohole.

Die Alkoxylierungsprodukte sind in bekannter Weise durch Umsetzung der vorstehenden Alkohole mit Alkylenoxiden, insbesondere Ethylen- oder Propylenoxid, erhältlich. Vorzugsweise beträgt der Alkoxylierungsgrad je Hydroxylgruppe 0 bis 10, d.h. 1 mol Hydroxylgruppe kann vorzugsweise mit bis zu 10 mol Alkylenoxiden alkoxyliert sein.

Als (Meth)acrylatverbindungen seien weiterhin Polyester(meth)acrylate genannt, wobei es sich um die Acrylsäureester von Polyesterolen handelt.

Als Polyesterole kommen z.B. solche in Betracht, wie sie durch Veresterung von Polycarbonsäuren, vorzugsweise Dicarbonsäuren, mit Polyolen, vorzugsweise Diolen, hergestellt werden können. Die Ausgangsstoffe für solche hydroxylgruppenhaltige Polyester sind dem Fachmann bekannt. Bevorzugt können als Dicarbonsäuren Bernsteinsäure, Glutarsäure, Adipinsäure, Sebacinsäure, o-Phthalsäure, deren Isomere und Hydrierungsprodukte sowie veresterbare Derivate, wie Anhydride oder Dialkylester der genannten Säuren eingesetzt werden. Als Polyole kommen die oben genannten Alkohole, vorzugsweise Ethylenglykol, Propylenglykol-1,2 und -1,3, Butandiol-1,4, Hexandiol-1,6, Neopentylglykol, Cyclohexandimethanol sowie Polyglykole vom Typ des Ethylenglykols und Propylenglykols in Betracht.

Polyester(meth)acrylate können in mehreren Stufen oder auch einstufig, wie z.B. in EP 279 303 beschrieben, aus Acrylsäure, Polycarbonsäure und Polyol hergestellt werden.

Weiterhin kann es sich bei Verbindungen a) z.B. um Epoxid- oder Urethan(meth)acrylate handeln.

Epoxid(meth)acrylate sind z.B. solche wie sie durch Umsetzung von epoxidierten Olefinen oder Poly- bzw. Diglycidylethern, wie Bisphenol-A-diglycidylether, mit (Meth)acrylsäure erhältlich sind.

Die Umsetzung ist dem Fachmann bekannt und z.B. in R. Holmann, U.V. and E.B. Curing Formulation for Printing Inks and Paints, London 1984, beschrieben.

Bei Urethan(meth)acrylaten handelt es sich insbesondere um Umsetzungsprodukte von Hydroxyalkyl(meth)acrylaten mit Poly- bzw. Diisocyanaten (s. ebenfalls R. Holmann, U.V. and E.B. Curing Formulation for Printing Inks and Paints, London 1984).

Es können natürlich auch Mischungen verschiedener Verbindungen a), insbesondere auch Mischungen der obigen (Meth)acrylverbindungen, eingesetzt werden.

Neben den Verbindungen a) enthalten die erfindungsgemäßen Zusammensetzungen verkappte Aminoverbindungen b). Bei Bestrahlung mit energiereichem Licht werden Verbindungen mit einer oder mehreren Aminogruppe(n) gebildet oder freigesetzt, die sich an aktivierte Doppelbindungen, z.B. Methacryl- bzw. insbesondere Acryldoppelbindungen, gemäß einer Michael-Addition anlagern können.

Die Anlagerung kann z.B. wie folgt erfolgen:

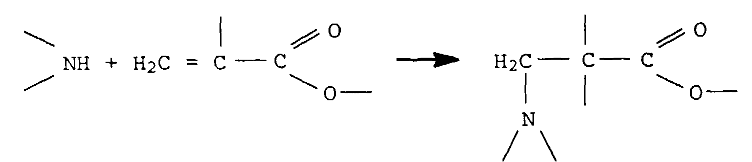

Die Anzahl der in der oder den Aminogruppen gebundenen H-Atome (aminische H-Atome) ist mindestens 2. Bevorzugt ist die Anzahl 2 bis 6, insbesondere 2 bis 4.

Da die Anzahl der aminischen H-Atome mindestens 2 ist, erfolgt auch entsprechend eine Addition an mindestens 2 aktivierte Doppelbindungen bzw. Acrylgruppen.

Im Falle einer primären Aminogruppe (2 aminische H-Atome) erfolgt zunächst eine Addition an eine Doppelbindung, wobei eine sekundäre Aminogruppe entsteht. Letztere kann sich an eine weitere Doppelbindungen anlagern. Verbindungen mit 2 primären Aminogruppen (4 aminische H-Atome) können sich entsprechend an 4 Doppelbindungen und Verbindungen mit 2 sekundären Aminogruppen können sich entsprechend an 2 Doppelbindungen anlagern.

Auf jeden Fall führt die Anlagerung so zu einer Kettenverlängerung oder Vernetzung, d.h. zur Härtung (im nachfolgenden kurz "Michael-analoge Härtung" genannt).

Die Verbindungen b) sind in Verbindungen a) oberflächenaktiv, d.h. Verbindungen b) konzentrieren sich an der Oberfläche der Verbindungen a).

Durch Bestrahlung mit energiereichem Licht wird so an der Oberfläche eine Michael-analoge Härtung bewirkt, welche nicht durch Sauerstoff inhibiert wird.

Die Polymerisation bzw. Härtung der Verbindungen a) erfolgt ansonsten durch den üblichen Radikalmechanismus, initiert durch die energiereiche Strahlung.

Der Gewichtsteil der Verbindungen b) beträgt 0,1 bis 20 Gew.-%, besonders bevorzugt 0,1 bis 10 Gew.-% und besonders bevorzugt 0,5 bis 5 Gew.-%, bezogen auf die Summe aus Verbindungen a) + b).

Eine Oberflächenaktivität der Verbindungen b) in Verbindungen a) läßt sich leicht durch Abmischen der Verbindungen b) mit a) und anschließende Bestimmung des Kontaktwinkels in folgender Weise bestimmen:

Die strahlungshärtbare Zusammensetzung aus a) + b) wird in einer Schichtdicke von 50 µm auf eine Glasplatte aufgetragen. Nach 2 Minuten wird der Kontaktwinkel eines Tropfens Wasser, der auf die Beschichtung gegeben wird, bestimmt.

Da die oberflächenaktive Substanz sich an der Oberfläche der Beschichtung anreichert, vergrößert sich im Falle der Mischung der Kontaktwinkel des Wassertropfens auf der Beschichtung.

Die Oberflächenaktivität der Verbindungen b) in den Mischungen aus a) und b) ist so groß, daß der Kontaktwinkel einer Mischung aus 99 Gew.-% a) und 1 Gew.-% b), gemessen 2 Minuten nach Auftragen auf der Glasoberfläche mindestens 110 %, vorzugsweise mindestens 160 % des entsprechenden Kontaktwinkels der reinen Verbindung a) ist.

Bei den Verbindungen b) handelt es sich beispielsweise um Komplexverbindungen, bei denen Aminoverbindungen an ein zentrales Metallatom gebunden sind. In dieser Form sind die Aminogruppen nicht reaktiv, d.h. können keine Michael-Addition eingehen. Durch Bestrahlen mit energiereichem Licht werden die Aminoverbindungen aus den Metallkomplexen freigesetzt.

Geeignete Komplexverbindungen sind z.B. Cobalt-III-amin-Komplexe, wie sie in S.K. Weit, C. Kutal und R.D. Allen, Chem. Mater. 4, 453 - 457 (1992) beschrieben sind.

Bei Verbindungen b) kann es sich insbesondere auch um Aminoverbindungen handeln, in denen die Aminogruppen durch photolabile, organische Schutzgruppen maskiert sind. Durch Bestrahlen mit energiereichem Licht werden die Schutzgruppen abgespalten und die Aminoverbindungen freigesetzt. Entsprechende Verbindungen sind in V.N.R. Pillai, Photoremovable Protecting Groups in Organic Synthesis, Synthesis, Jan. 1980, Seite 1 - 26 beschrieben.

Bei den photolabilen Gruppen handelt es sich z.B. um eine Dimethyl-3,5-dimethoxybenzyloxycarbonylgruppe, eine Benzyloxycarbonylgruppe bzw. eine 3-Nitrophenylgruppe, eine Phenacylgruppe, eine 3,5-Dimethoxybenzoinylgruppe oder 2-Nitrobenzylgruppen. Als letztere seien im einzelnen die 2-Nitrobenzylgruppe, α-substituierte 2-Nitrobenzylgruppen, 2-Nitrobenzyloxycarbonyl- und α-substituierte 2-Nitrobenzyloxycarbonylgruppen und 2-Nitrophenylethylenglycolgruppe genannt.

Mit letzteren maskierte Aminoverbindungen können bevorzugt durch Umsetzung von entsprechenden Nitrobenzylalkoholen mit Isocyanaten, z.B. aliphatischen, cycloaliphatischen und aromatischen Diisocyanaten, z.B. 1,4-Butandiisocyanat, 1,6-Hexan-diisocyanat, 2,2,4- und 2,4,4-Trimethylhexamethylendiisocyanat, Cyclohexandiisocyanat, Methylcyclohexandiisocyanat, Isophorondiisocyanat, 4,4'-Diisocyanatodiphenylmethan, 4,4'-Diisocyanatodicyclohexylmethan, 2,4- und 2,6-Toluylendiisocyanat, Tetramethylxylylendiisocyanat oder auch mit Urethdion-, Biuret- und Isocyanurat-Gruppen aufweisenden Additionsprodukten insbesondere von Diisocyanaten hergestellt werden.

In (Meth)acrylatverbindungen a) oberflächenaktive Verbindungen b) sind insbesondere verkappte Aminoverbindungen mit einem langkettigen Kohlenwasserstoff-, Fluorkohlenstoff- oder Fluorkohlenwasserstoffrest mit bevorzugt 10-40, besonders bevorzugt 16-30 C-Atomen. Genannt seien z.B. Verbindungen der Formel 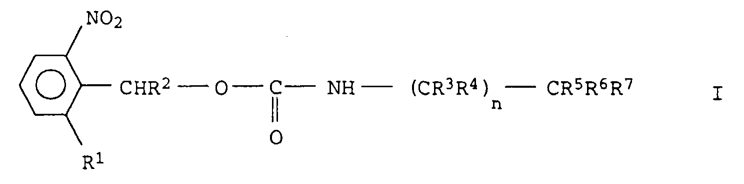 wobei R¹ für ein H-Atom oder eine NO₂-Gruppe, R² für ein H-Atom oder eine C₁-C₈, bevorzugt eine C₁-C₃ Alkylgruppe und R³ bis R⁷ jeweils unabhängig voneinander für ein H-Atom oder ein F-Atom stehen und n für eine Zahl von 15 bis 29 steht.

Die Bestrahlung mit energiereichen Licht spaltet Verbindung I eine primäre Aminverbindung der Formel

H₂N - (CR³R⁴)ₙ - CR⁵R⁶R⁷

ab.

Genannt seien auch Verbindungen der Formel II 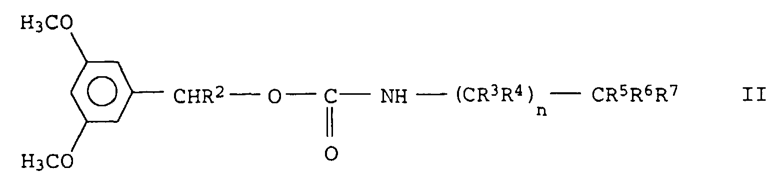 worin R²-R⁷ die oben genannte Bedeutung haben. Bei Bestrahlung mit energiereichen Licht wird entsprechend die gleiche primäre Aminverbindung freigesetzt wie oben.

Die Verbindungen I und II sind als solche bekannt und können leicht durch Umsetzung der entsprechenden Nitrobenzylalkohole mit Isocyanaten, z.B. langkettigen linearen oder verzweigten aliphatischen, oder fluorhaltigen linearen oder verzweigten aliphatischen, cycloaliphatischen oder aromatischen Isocyanaten, z.B. Octadecyliisocyanat hergestellt werden.

Die erfindungsgemäße Zusammensetzung kann für die beabsichtigte Verwendung übliche Zusatzstoffe enthalten.

Bei der Verwendung als Beschichtungsmittel kann es sich dabei z.B. um Pigmente, Farbstoffe, Füllstoffe u.a. handeln.

Die strahlungshärtbaren Verbindungen a) können durch UV-Licht oder Elektronenstrahlen radikalisch gehärtet werden.

Zur Strahlungshärtung durch UV-Licht werden üblicherweise Photoinitiatoren in Mengen von bis zu 5 Gew.-%, bezogen auf die Verbindungen a) zugesetzt.

Als Photoinitiatoren in Betracht kommen z.B. Benzophenon, Alkylbenzophenone, halogenmethylierte Benzophenone, Michlers Keton, Anthron und halogenierte Benzophorone. Ferner eignen sich Benzoin und seine Derivate. Ebenfalls wirksame Photoinitiatoren sind Anthrachinon und zahlreiche seiner Derivate, beispielsweise β-Methylanthrachinon, tert.-Butylanthrachinon und Anthrachinoncarbonsäureester und, besonders wirksam, Acylphosphinoxide, z.B. 2,4,6-Trimethylbenzoyldiphenylphosphinoxid (Lucirin® TPO).

Den erfindungsgemäßen Zusammensetzungen können auch noch Lösemittel zugesetzt werden, z.B. zur Einstellung der Verarbeitungsviskosität.

Insbesondere sind Lösemittel geeignet, in denen auch Verbindungen b) gut löslich sind, z.B, Dimethylformamid, N-Methylpyrrolidon, Butylacetat, Methylpropylenglykolacetat und Diethylenglykoldimethylether.

Bei der Strahlungshärtung der erfindungsgemäßen Zusammensetzungen wird mit energiereichem Licht der Wellenlänge bestrahlt, bei der gemäß der Natur der Verbindungen b) die Aminoverbindungen freigesetzt werden. Die Michael-Addition läuft unmittelbar nach Freisetzung der Aminoverbindungen spontan ab. Zur Beschleunigung der Michael-Addition kann die Temperatur während der Bestrahlung oder anschließend auf 40 bis 120°C gehalten werden. Im allgemeinen ist jedoch eine Temperaturerhöhung nicht notwendig.

Die radikalische Härtung der Zusammensetzung kann vor oder nach der vorstehend beschriebenen Michael-analogen Härtung mit Elektronenstrahlen oder mit UV-Licht durchgeführt werden, falls der benötigte Wellenlängenbereich für die Freisetzung der Aminoverbindungen in b) und für die radikalische Härtung von a) verschieden ist.

Im allgemeinen wird jedoch das verwendete energiereiche Licht, z.B UV-Licht Wellenlänge von 240 bis 400 nm oder Elektronenstrahlen gleichermaßen für die Michael-analoge Härtung als auch die radikalische Härtung geeignet sein, so daß beim Bestrahlen mit energiereichen Licht beide Härtungsmechanismen gleichzeitig ablaufen.

Die erfindungsgemäßen Zusammensetzungen härten zu klebfreien Beschichtungen oder Formkörpern, welche gute mechanische Eigenschaften z.B. eine hohe Härte und gute elastische Eigenschaften aufweisen.

Eine Inhibierung durch Sauerstoff ist kaum zu beobachten, so daß auf Sauerstoffausschluß ganz oder zum Teil verzichtet werden kann.

### Beispiele

### Verbindung 1: Umsetzungsprodukt von Octadecylisocyanat und o-Nitrobenzol

Es wird eine Urethan (Verbindung I) aus Octadecylisocyanat und o-Nitrobenzylalkohol hergestellt, analog wie in C.G. Willson et. al. SPIE, Advances in Resist Technology and Processing X, Vol. 1925,354-65, (1993), beschrieben.

38,3 Teile 2-Nitrobenzylalkohol werden in 344 Teilen Toluol vorgelegt, dann läßt man bei Rückfluß (ca.113°C) innerhalb 60 Minuten 73,9 Teile Octadecylisocyanat zutropfen und weitere 4,5 Stunden nachrühren. Im IR Spektrum ist keine NCO-Bande mehr zu detektieren. Beim Abkühlen (<37°C) fallen weiße Kristalle aus, welche abgesaugt, mit Toluol gewaschen und im Vakuum getrocknet werden. Es resultieren 71,7 Teile eines Pulvers mit Schmelzpunkt 79-80°C. Das NMR Spektrum bestätigt die erwartete Strukturformel des Urethans aus Octadecylisocyanat und Nitrobenzylalkohol. Die Substanz ist in THF bis 8 Gew.-%, in Toluol mit 1 Gew.-% und in einigen Acrylate in der Hitze löslich.

Zur Demonstration, daß sich bei Belichtung ein Amin bildet, wurde die Substanz in THF gelöst und auf eine Nacl-Platte aufgebracht. Nach Belichtung mit einem Excimerlaser (248 nm) wird nach 180 Sekunden eine leichte Abnahme der CO-Bande bei 1740 cm(-1) und eine leichte Zunahme der Aminbande bei 3500 cm(-1) und nach 600 Sekunden jeweils deutliche Ab-bzw. Zunahme der Banden beobachtet.

### Oberflächenaktivität

1 Gew-Teil der Verbindung 1 werden in 99 Gew-Teilen Urethanacrylatharz, hergestellt aus dem Isocyanurat von Hexamethylendiisicyanat und Hydroxyethylacrylat gelöst. Nach dem Auf Aufziehen eines Films auf eine Glasplatte wird der Kontaktwinkel nach verschiedenen Zeiten gemessen: nach 0,5 Minuten : 36°, nach 2 Minuten 41°. Der Kontaktwinkel des reinen Urethanacrylatharzes beträgt nur 20° und verändert sich nicht mit der Lagerzeit.

### Verbindung 2: Umsetzungsprodukt von 3,5-Dimethoxybenzylalkohol mit Octadecylisocyanat:

42 Teile 3,5-Dimethoxybenzylalkohol werden in 378 Teilen Toluol vorgelegt. Es werden 5 Teile Dibutylzinndilaurat zugegeben und dann bei Rückflußtemperatur (ca.109°C) innerhalb 60 Minuten 74 Teile Octadecylisocyanat zugetropft und 5 Stunden am Rückfluß nachgerührt. Im Eisbad (<10°C) fallen weiße Kristalle aus (Ausbeute: 57 Teile). Im Dünnschichtchromatogramm sind keine Ausgangsverbindungen mehr zu erkennen. Die Substanz ist H-NMR spektroskopisch rein.

Die Prüfung, ob sich bei Belichtung eine Aminoverbindung bildet, und die Prüfung der Oberflächenaktivität wurde wie oben vorgenommen.

Bei Belichtung ist bereits nach 180 Sekunden eine deutliche Abnahme der 1730 cm⁻¹ Carbonylbande zu sehen. Der Kontaktwinkel der Mischung der Verbindung 2 mit dem Urethanacrylatharz betrug nach 0,5 Minuten 43° und nach 2 Minuten 47°.

### Beispiel 1

Eine Lösung von 1 Gew-Teil Verbindung 2 in dem obigen Polyurethanacrylatharz wird mit 3% Irgacure® 500 als Photoinitiator versetzt, dann in einer Schichtdicke von 50 µm auf eine Glasplatte aufgezogen und mit Quecksilberlampen (2 x 80 Watt) bei einer Geschwindigkeit des Transportbandes von 25m/min unter Normalatmosphäre (Luft) belichtet. Der Kontaktwinkel beträgt 61°. Die Oberfläche ist klebfrei.

### Vergleichsbeispiel 1 a)

Es wird wie in Beispiel 1 verfahren, nur unter Weglassung der Verbindung 2, so resultiert ein Kontaktwinkel des Polyurethanacrylatharzes von 53° und eine klebrige Oberfläche.

## Patentansprüche

1. Strahlungshärtbare Zusammensetzungen, mit reduzierter Empfindlichkeit gegenüber Sauerstoff, enthaltend
a) strahlungshärtbare, radikalisch polymerisierbare Verbindungen.
b) verkappte Aminoverbindungen, welche in Verbindungen a) oberflächenaktiv sind und bei Bestrahlung mit energiereichem Licht Aminoverbindungen mit primären, sekundären oder primären und sekundären Aminogruppen freisetzten, wobei die Anzahl der in den Aminogruppen gebundenen H-Atome (aminische H-Atome) insgesamt mindestens 2 ist,
wobei der Gehalt der Verbindungen b) 0,1 bis 20 Gew.-%, bezogen auf die Summe von a) + b) beträgt und als Maß für die Oberflächenaktivität von b) der Kontaktwinkel eines Wassertropfens auf einer Beschichtung aus 99 Gew.-% a) und 1 Gew.-% b) auf Glas (Dicke der Beschichtung 50 µm) gemessen 2 Minuten nach Auftragen der Beschichtung gilt und dieser Kontaktwinkel mindestens 110 % des Kontaktwinkels im Fall einer Beschichtung nur aus a) beträgt.

2. Strahlungshärtbare Zusammensetzungen gemäß Anspruch 1, wobei mindestens 50 Gew.-% der Verbindungen a) (Meth)acrylatverbindungen mit zwei oder mehr als zwei (Meth)acrylgruppen sind.

3. Verfahren zur Herstellung von strahlungshärtbaren Zusammensetzungen gemäß einen der Ansprüche 1 bis 2, dadurch gekennzeichnet, daß Verbindungen b) den Verbindungen a) zugesetzt werden.

4. Verfahren zur Herstellung von Beschichtungen oder Formkörpern, dadurch gekennzeichnet, daß strahlungshärtbare Zusammensetzungen gemäß einem der Ansprüche 1 bis 2 mit energiereichen Licht bestrahlt werden.

5. Formkörper oder Beschichtungen, erhältlich durch ein Verfahren gemäß Anspruch 4.

## Claims

1. A radiation-curable composition of reduced oxygen sensitivity, comprising
a) radiation-curable, free-radically polymerizable compounds, and
b) capped amino compounds which are surface-active in compounds a) and on irradiation with high-energy light liberate amino compounds having primary, secondary or primary and secondary amino groups, the overall number of hydrogen atoms bonded in the amino groups (amine hydrogens) being at least 2,
wherein the content of the compounds b) is 0.1-20% by weight based on the sum of a) + b) and the contact angle of a water drop on a coating of 99% by weight a) and 1% by weight b) on glass (thickness of the coating 50 µm) measured 2 minutes after application of the coating is a measure of the surface activity of b), and this contact angle is at least 110% of the contact angle in the case of a coating only of a).

2. A composition as claimed in claim 1, wherein at least 50% by weight of the compounds a) are (meth)acrylate compounds having two or more (meth)acrylic groups.

3. A process for preparing a composition as claimed in one of claims 1 and 2, which comprises adding compounds b) to the compounds a).

4. A process for producing a coating or molding, which comprises irradiating a composition as claimed in one of claims 1 and 2 with high-energy light.

5. A molding or coating obtainable by a process as claimed in claim 4.

## Revendications

1. Compositions durcissables par rayonnement, ayant une sensibilité réduite envers l'oxygène, contenant
a) des composés durcissables par rayonnement, polymérisables par voie radicalaire,
b) des composés amino masqués, qui, dans les composés a), sont tensio-actifs et, lorsqu'ils sont irradiés par une lumière riche en énergie, libèrent des composés amino ayant des groupes amines primaires ou secondaires ou bien primaires et secondaires, le nombre des atomes de H liés dans les groupes amino (atomes de H aminiques) étant au total d'au moins 2,
dans lesquelles la teneur des composés b) est de 0,1 à 20% en poids, par rapport à la somme de a) + b) et l'angle de contact d'une goutte d'eau sur un revêtement constitué de 99% en poids de a) et de 1% en poids de b), sur du verre (épaisseur du revêtement 50 µm), mesuré deux minutes après l'application du revêtement servant à mesurer l'effet tensio-actif de b), et cet angle de contact valant au moins 110% de l'angle de contact dans le cas d'un revêtement constitué uniquement de a).

2. Compositions durcissables par rayonnement selon la revendication 1, dans lesquelles au moins 50% en poids des composés a) sont des composés (méth)acrylate ayant deux ou plus de deux groupes (méth)acryliques.

3. Procédé de préparation de compositions durcissables par rayonnement selon l'une quelconque des revendications 1 à 2, caractérisé en ce que les composés b) sont ajoutés aux composés a).

4. Procédé de préparation de revêtements ou de corps moulés, caractérisé en ce que les compositions durcissables par rayonnement selon l'une quelconque des revendications 1 à 2 sont irradiées par une lumière riche en énergie.

5. Corps moulés ou revêtements, pouvant être obtenus au moyen d'un procédé selon la revendication 4.
